# EUROPEAN PATENT APPLICATION

(11) **EP 4 383 518 A1**
(43) Date of publication of application: **12.06.2024**
(21) Application number: 23166043.2
(22) Date of filing: 31.03.2023
(51) Int. Cl.: H02J 50/10, H02J 50/20, H02J 50/80, H02J 7/00

(54) **ELECTRONIC DEVICE POWERED BY WIRELESS CHARGING**

(30) Priority: 06.12.2022 EP 22306794
(71) Applicant: STMicroelectronics International N.V., 1228 Plan-les-Ouates, Geneva (CH)
(72) Inventor: WUTTE, Rene, 8151 SANKT BARTHOLOMÄ (AT)
(74) Representative: Cabinet Beaumont

(57) **Abstract**

The present disclosure relates to a wireless electronics device comprising:
- an antenna (202) for receiving a radio frequency signal;
- an energy storage device for storing electrical energy;
- a frequency detection circuit configured to detect whether the received radio frequency signal is in a first frequency range or in a second frequency range, the first and second frequency ranges being non-overlapping;
- a first communications circuit configured to transmits a first return signal if the radio frequency signal is in the first frequency range and to establish wireless charging of the energy storage device according to a first protocol; and
- a second communications circuit configured to transmits a second return signal if the radio frequency signal is in the second frequency range and to establish wireless charging of the energy storage device according to a second protocol.

## Description

### Technical field

The present disclosure relates generally to the field of wireless devices, and in particular to an electronics device powered by wireless charging.

### Summary of Invention

Wireless charging is becoming increasing prevalent as a means of charging batteries of electronic devices in view of its ease of use and robustness when compared to physical connectors.

There are multiple standards for wireless charging which are adapted to supply different power levels. For example, the NFC (Near Field Communications) wireless charging standard is configured to provide wireless charging at a power level of between several mW and up to 1 W today, and up to 3 W in future. The Qi wireless charging standard is configured to provide wireless charging at between 5 and 15 W, while it is also envisaged to provide charging lower than 5 W and higher than 15 W.

In view of the different charging power levels, there are compatibility problems among the wireless charging standards. This creates a technical problem as it may not be possible to charge some electronic devices using certain wireless chargers. For example, the charging function of a Qi wireless charger may be disabled if an NFC tag is detected in its field.

### Summary of Invention

It is an aim of embodiments of the present disclosure to at least partially address one or more problems in the prior art.

Indeed, it has been found that Qi chargers can have a negative impact on NFC tags as their harmonics are strong enough to induce enough power into cards to cause those cards to be degraded or even destroyed. While it has been proposed to use an NFC reader in combination with a Qi charger to detect NFC cards and disable charging, the present disclosure describes a solution allowing the energy to be used for energy harvest in multiple applications. For example, a Qi communication protocol is added to the point the Qi charger would not recognize the NFC tag as such, but as a valid Qi receiver and use the harmonics as an alternative source for the power harvest while still being able to use NFC as the main source for the energy received. This for example allows the end user not only to use the dedicated NFC charging transmitter, but also alternatively to use the Qi field as a backup using the same antenna tuned for the 13.56MHz field.

According to one aspect, there is provided a wireless electronics device comprising:
- an antenna for receiving a radio frequency signal;
- a frequency detection circuit configured to detect whether the received radio frequency signal is in a first frequency range or in a second frequency range, the first and second frequency ranges being non-overlapping;
- a first communications circuit configured to transmits a first return signal if the radio frequency signal is in the first frequency range and to establish electrical energy recuperation from the received radio frequency signal according to a first protocol; and
- a second communications circuit configured to transmits a second return signal if the radio frequency signal is in the second frequency range and to establish electrical energy recuperation from the received radio frequency signal according to a second protocol.

According to one embodiment, the wireless electronics device further comprises a power management circuit configured to recuperate the electrical energy from the received radio frequency signal and: to supply the recuperated electrical energy to one or more circuits of the wireless electronics device; and/or to recharge an energy storage device of the wireless electronics device.

According to one embodiment, the first protocol is the Qi wireless charging protocol and/or the second protocol is the NFC wireless charging protocol.

According to one embodiment, the first frequency range has a higher frequency limit that is less than 13 MHz, and the second frequency range has a lower frequency limit that is higher than 300 kHz, the higher frequency limit and lower frequency limit for example being an intermediate frequency level separating the first and second ranges.

According to one embodiment, the wireless electronics device further comprises an oscillator configured to generate a reference signal at a reference frequency, wherein the frequency detection circuit comprises a frequency detector configured to compare a frequency of the radio frequency signal with the reference frequency, and to indicate whether the radio frequency signal is in the first or second frequency range based on the comparison, the frequency detector for example being further configured to indicate when the radio frequency signal is in both the first and second frequency ranges, wherein the wireless electronics devices is for example configured to select one of the first and second communications circuits to be used when the radio frequency signal is in both the first and second frequency ranges.

According to one embodiment, the wireless electronics device further comprises a matching circuit coupled to the antenna, wherein the power transfer according to the first protocol is in a higher power range than the power transfer according to the second protocol, and the antenna and matching circuit are tuned to a frequency corresponding to the second protocol.

According to one embodiment, the first communications circuit comprises a first modulator and a first demodulator, the first modulator and first demodulator being configured to implement wireless communications according to the Qi communications protocol; and/or the second communications circuit comprises a second modulator and a second demodulator, the second modulator and second demodulator being configured to implement wireless communications according to the NFC communications protocol.

According to one embodiment, the first modulator is configured to perform amplitude shift keying modulation, and the first demodulator is configured to perform frequency shift keying demodulation.

According to one embodiment, the second modulator is configured to perform NFC modulation, for example based on load modulation, and/or the second demodulator is configured to perform NFC demodulation.

According to one embodiment, the energy storage device is a battery, the wireless electronics device further comprising an integrated charger for charging the energy storage device.

According to one embodiment, the wireless electronics device further comprises an active rectifier and/or a power limiter configured to limit the charging power supplied according to the first protocol.

According to one embodiment, the device is one or more of: an integrated circuit card; a mobile telephone; a tablet computer; wireless headphones, hearing aids or earphones; a wrist watch; and a portable electronics device comprising a battery.

According to a further aspect, there is provided a wireless charging system comprising the above wireless electronics device and a wireless charger configured to perform wireless power transfer to, and/or charging of, the wireless electronics device according to the first protocol, the wireless charger for example being configured to wirelessly emit an electromagnetic field having a power of at least 5 W, and for example of at least 10 W.

According to a further aspect, there is provided a wireless charging system comprising the above wireless electronics device; and a wireless charger configured to perform wireless power transfer to, and/or charging of, the wireless electronics device according to the second protocol, the wireless charger for example being configured to wirelessly emit an electromagnetic field having a power of 3 W or less.

According to a further aspect, there is provided a method of wireless powering of an electronics device, the method comprising: receiving, by an antenna of the electronics device, a radio frequency signal; detecting, by a frequency detection circuit of the electronics device, whether the received radio frequency signal is in a first frequency range or in a second frequency range, the first and second frequency ranges being non-overlapping; transmitting, by a first communications circuit of the electronics device, a first return signal if the radio frequency signal is in the first frequency range and establishing electrical energy recuperation from the received radio frequency signal according to a first protocol; and transmitting, by a second communications circuit, a second return signal if the radio frequency signal is in the second frequency range and establishing electrical energy recuperation from the received radio frequency signal according to a second protocol.

### Brief description of drawings

The foregoing features and advantages, as well as others, will be described in detail in the following description of specific embodiments given by way of illustration and not limitation with reference to the accompanying drawings, in which:
Figure 1 schematically illustrates a wireless charging system according to an example embodiment;
Figure 2 schematically illustrates a wireless electronics device of the system of Figure 1 in more detail according to an example embodiment of the present disclosure;
Figure 3 schematically illustrates the wireless electronics device of Figures 1 and 2 in even more detail according to an example embodiment of the present disclosure;
Figure 4 is a flow diagram representing processes for activating NFC and Qi charging according to an example embodiment of the present disclosure; and
Figure 5 is a graph representing average power transmitted as a function of the rail voltage according to an example embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

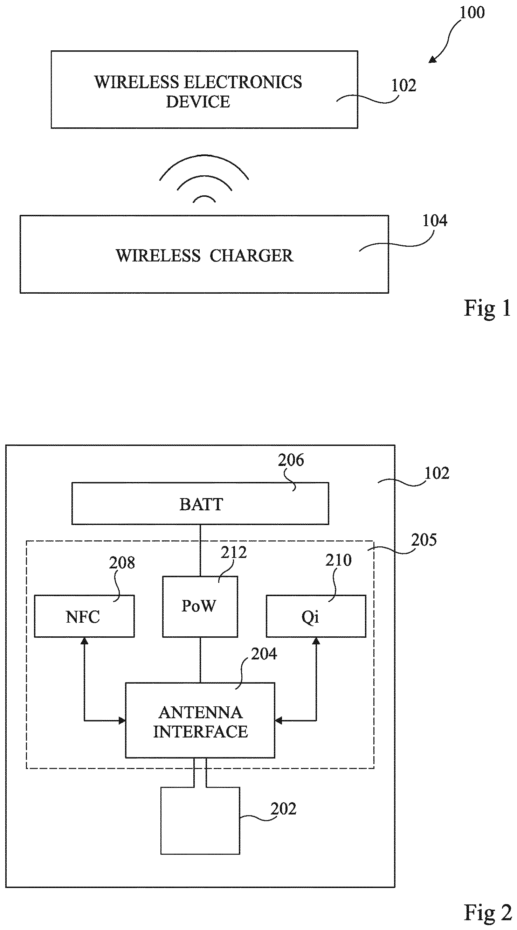

Figure 1 schematically illustrates a wireless charging system 100 according to an example embodiment. A wireless electronics device (WIRELESS ELECTRONICS DEVICE) 102 is for example configured to be wirelessly powered and/or charged by a wireless charger (WIRELESS CHARGER) 104, for example by placing the device 102 on the charger 104, or bringing it to within a relatively short distance of the charger 104, such as to within 5 cm of the charger.

The wireless charger 104 is for example capable of powering and/or charging the device 102 according to a given wireless charging protocol, such as the NFC or Qi protocol.

The wireless electronics device 102 is for example any portable device such as an integrated circuit (IC) card or RF tag, a mobile telephone, tablet computer, wireless headphones or earphones, hearing aid, wrist watch, battery-powered portable electronics device, etc. The wireless electronics device 102 is for example capable of being powered and/or charged by a plurality of different wireless charging protocols. For example, the charger 104 is configured to employ a first wireless charging protocol, and the wireless electronics device 102 is configured to support the first wireless charging protocol, and at least a second wireless charging protocol different to the first wireless charging protocol. For example, the first and second wireless charging protocols differ in terms of the frequency of the power transmission and communications signal and in some cases also by the power range supplied by the power transmission signal.

Figure 2 schematically illustrates the wireless electronics device 102 of Figure 1 in more detail according to an example embodiment of the present disclosure. The device 102 for example comprises an antenna 202 for wireless charging, the antenna being coupled to a wireless interface (WIRELESS INTERFACE) 204 of a circuit 205, which is for example an integrated circuit. The circuit 205 also comprises a communications circuit (NFC) 208, and a further communications circuit (Qi) 210, coupled to the antenna interface 204. In one example, the circuit 208 is configured to support communications and power transfer according to the NFC protocol via the antenna interface 204, and the circuit 210 is configured to support communications and power transfer according to the Qi protocol via the antenna interface 204. However, in alternative embodiments the communication circuit 208 and/or 210 could support another standard.

The antenna interface 204 is for example coupled to a power management circuit (PoW) 212, which is for example part of the circuit 205. The power management circuit 212 is for example configured to harvest energy from the signal received by the antenna 202. In some embodiments, this energy is stored to an energy storage device (BATT) 206 for storing electrical energy, the device 206 for example being a battery. The energy storage device 206 is for example an off-chip device, in other words it does not form part of the integrated circuit 205. Additionally or alternatively, the recuperated energy is for example used to directly power one or more circuits of the device 102, in other words direct power transfer is performed.

According to one embodiment, the antenna interface 204 is configured to detect whether a radio frequency signal received via the antenna 202 is a signal according to the protocol supported by the communications circuit 208 or 210, based for example on a detected frequency of the received signal. If it is detected that the received signal is in a frequency range corresponding to the protocol supported by the circuit 208, the antenna interface 204 is for example configured to activate the communications circuit 208, which is configured to transmits a return signal and to establish wireless charging of the energy storage device 206 according to the protocol supported by the circuit 208. If, however, it is detected that the received signal is in a frequency range corresponding to the protocol supported by the circuit 210, the antenna interface 204 is for example configured to activate the communications circuit 210, which is configured to transmits a return signal and to establish wireless charging of the energy storage device 206 according to the protocol supported by the circuit 210.

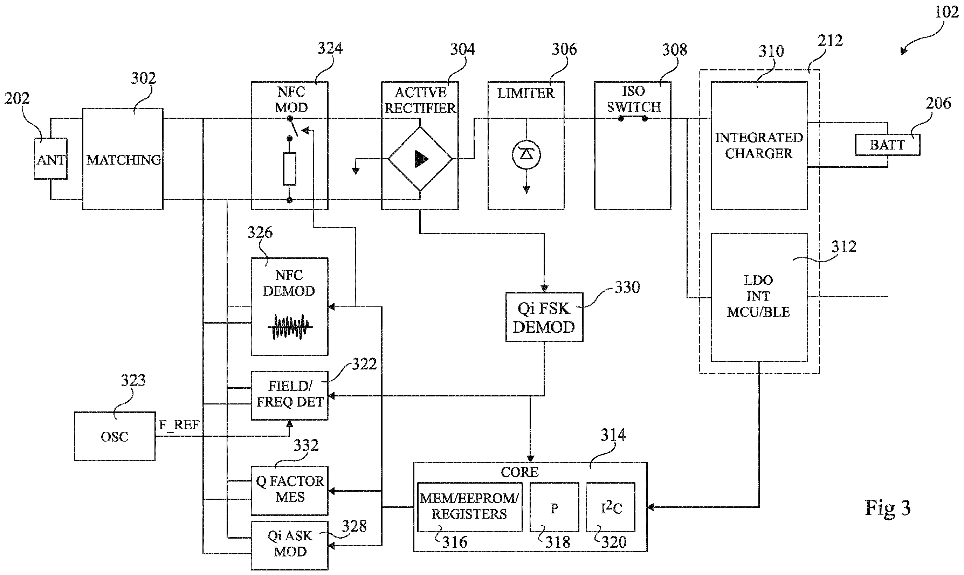

Figure 3 schematically illustrates the wireless electronics device 102 of Figures 1 and 2 in even more detail according to an example embodiment of the present disclosure.

The antenna interface 204 for example comprises, in order from the antenna (ANT) 202 to the energy storage device (BATT) 206, a matching circuit (MATCHING), an active rectifier (ACTIVE RECTIFIER) 304, a voltage limiter (LIMITER) 306, an isolation switch (ISO SWITCH) 308, and an integrated charger (INTEGRATED CHARGER) 310 forming part of the power management circuit 212.

The matching circuit 302 is for example configured to provide impedance matching. The two input/output terminals of the antenna 202 are for example coupled to two inputs of the matching circuit 302, and two outputs of the matching circuit 302 are coupled to the active rectifier 304.

The active rectifier 304, which is for example referenced to ground via a ground rail, is for example configured to transform the AC voltage signal received on the differential outputs of the matching circuit 302 into a DC voltage at an output of the active rectifier 304. In some embodiments, the antenna 202 and matching circuit are tuned to a frequency corresponding to the protocol supported by the communications circuit 208, which is for example higher than the frequency corresponding to the protocol supported by the communications circuit 210.

The voltage limiter 306 is for example a programmable shunt regulator configured to detect when the voltage supplied by the active rectifier 304 exceeds a limit, and to respond by shunting the excessive current to the ground rail. In some embodiments, the voltage threshold of the voltage limiter 306 is programmable. The voltage limiter 306 is for example implemented by a Zener diode, coupled between the output of the active rectifier 304 and the ground rail.

The isolation switch 308 is for example coupled between the output of the voltage limiter 306 and an input of the integrated charger 310, and can be controlled in order to isolate the integrated charger 310 from the received signal by placing the switch in an open state. For example, the energy storage device 206 is disconnected, using the switch 308, from the energy recuperation chain formed of the elements 304, 306, during storage or shipping of the device, to avoid discharging.

The integrated charger 310 is for example a circuit configured to supply a charging current to the energy storage device 206 using the DC voltage supplied from the active rectifier 304.

In some embodiments, the power management circuit 212 comprises, in addition to or in place of the integrated charger 310, a voltage regulator (LDO INT MCU/BLE) 312, and the DC voltage supplied from the active rectifier 304 is also supplied to the voltage regulator 312. The voltage regulator 312 is for example an integrated voltage regulator, such as a low drop-out (LDO) regulator, suitable for powering a processing device, such as an MCU (Micro-Control Unit), and/or a further communications circuit, such as a Bluetooth low energy (BLE) circuit.

The wireless electronics device 102 also for example comprises a processing device (CORE) 314, which is for example powered by the integrated voltage regulator 312. The processing device comprises, for example, one or more memories (MEM/EEPROM/REGISTERS) 316, including for example RAM (random access memory), EEPROM (electrically erasable programmable read only memory) and/or registers, one or more processors (P) 318 and a communications interface (I2C) 302 for communicating with the communication circuits 208, 210.

The antenna interface 204 also for example comprises a frequency detection circuit (FIELD/FREQ DET) 322 configured to detect the presence of an RF field at the antenna 202, and to detect a frequency of this RF field. An output of the frequency detection circuit 322 is for example coupled to the processing device 314. In some embodiments, the frequency detection circuit 322 receives a reference frequency F_REF generated by oscillator (OSC) 323 of the device 102, which is for example an external (off-chip) quartz oscillator or an RC oscillator, which could be on-chip or off-chip. The frequency detection circuit 322 for example comprises a frequency detector (not illustrated) configured to compare the received RF signal with the reference signal F_REF to determine whether the received signal is higher or lower than the reference frequency F_REF. For example, in the case that the frequency detection circuit 322 is to distinguish between two different field frequencies, the reference signal F_REF is for example at a central frequency around halfway between these field frequencies. In the case that the protocols used by the communications circuits 208 and 210 are the NFC and Qi protocols, the reference frequency is for example chosen to be an intermediate frequency between the frequencies of 300kHz and 13.56MHz, for example a frequency of between 500kHz and 10MHz. In some embodiments, it would be possible to provide two reference signals at two different frequencies each of which is between the field frequencies, and to use two frequency detection circuits respectively for comparing the field frequency with each of the reference frequencies. As one of the reference signals will be at a frequency closer to one of the field frequencies, and the other will be at a frequency closer to the other of the field frequencies, the outputs of the comparators will enable a determination of whether the field frequency is closest to the frequency of one or the other of the reference frequencies.

The communications circuit 208 for example comprises an NFC modulation circuit (NFC MOD) 324, which for example applies load modulation, and an NFC demodulation circuit (NFC DEMOD) 326. For example, the modulation circuit 324 comprises a switch, which is for example coupled in series with a resistor, the switch and optional resistor being coupled between the outputs of the matching circuit 302. The switch is for example controlled by the processing device 314.

The communications circuit 210 for example comprises a Qi modulation circuit (Qi ASK MOD), which for example applies amplitude shift keying (ASK) modulation, and a Qi demodulation circuit (Qi FSK DEMOD) 330, which for example applies frequency shift keying (FSK) demodulation.

In some embodiments, the wireless electronics device 102 also comprises a Q-factor measuring circuit (Q FACTOR MES) 332. For example, the circuit 332 is configured to perform a Q-factor measurement on the transmission side before power transfer and the measured value is used for detecting the presence of a foreign object in the field.

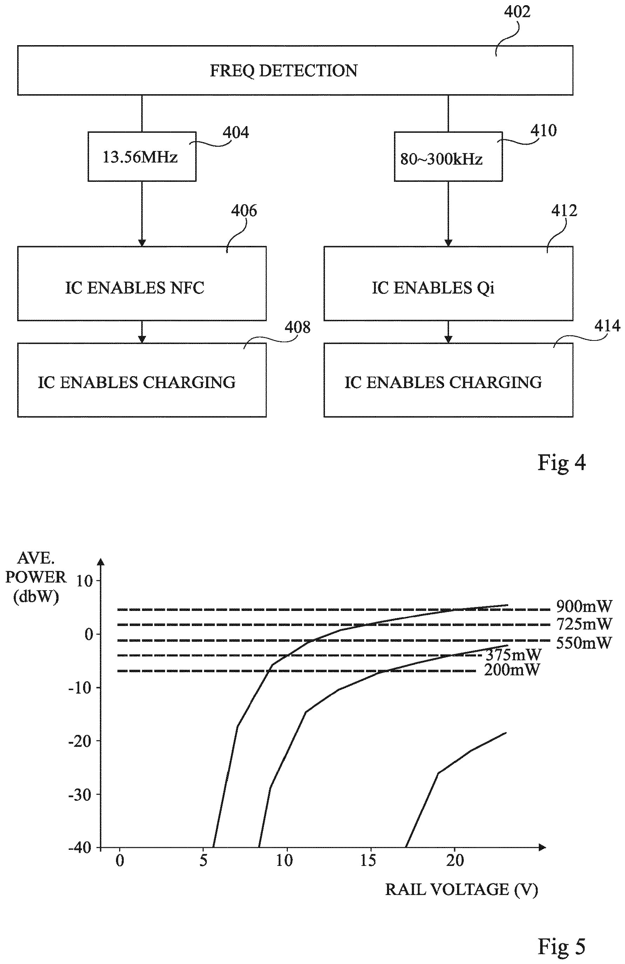

In operation, the frequency detection circuit 322 is for example configured to detect when the antenna 202 is positioned in an RF field and an input RF signal is thus present across the outputs of the matching circuit 302. Furthermore, the frequency detection circuit 322 is for example configured to detect whether the frequency of the RF signal is in a frequency band corresponding to the communications protocols of the communications circuit 208 or 210. For example, the frequency detector of the frequency detection circuit 322 compares the frequency of the received RF signal with the frequency of the reference signal F_REF, and if it is higher, the received signal is considered to be an NFC signal, whereas if it is lower, the received signal is considered to be a Qi signal. This information is for example suppled to the processing device 314, which is for example configured to activate the modulation and demodulation circuits of the appropriate communications circuits, as will now be described in more detail with reference to Figure 4.

Figure 4 is a flow diagram representing processes for activating NFC and Qi charging according to an example embodiment of the present disclosure.

In an operation 402 (FREQ DETECTION), a frequency detection operation is performed by the frequency detection circuit 322, as described above. For example, this permits a detection of whether the frequency of a received RF signal corresponds to a frequency of the communications protocol of the circuit 208, for example a frequency of 13.56 MHz as used by the NFC protocol, or to a frequency of the communications protocol of the circuit 210, for example a frequency of 80-300 kHz, as used by the Qi protocol.

If the received RF signal is determined to be an NFC signal (branch 404, 13.56MHz), in an operation 406 (IC ENABLES NFC), the processing device 314 is for example configured to activate the NFC communications circuit 208, in order to establish NFC communications between the circuit 208 and the wireless charger 104. In an operation 408 (IC ENABLES CHARGING), wireless charging is then for example enabled by the processing device 314, for example by using the NFC modulation circuit 324 to request the start of power transmission from the wireless charger to the device 102. Indeed, the circuits 324 and 326 are respectively used to send and receive NFC data communications, and are for example configured to negotiate power, for example using NDEF (NFC Data Exchange Format) messages, and to identify the device 102 as a charging tag.

If the received RF signal is determined to be a Qi signal (branch 410, 80~300kHz), in an operation 412 (IC ENABLES Qi), the processing device 314 is for example configured to activate the Qi communications circuit 210 in order to establish Qi communications between the circuit 210 and the wireless charger 104. Communications Rx to Tx, in other words from the device 102 to the charger 104, are for example via ASK, and communications Tx to Rx, in other words from charger 104 to device 102, are for example via FSK. In an operation 414 (IC ENABLES CHARGING), wireless charging is then for example enabled by the processing device 314, for example by using the Qi modulation circuit 328 to request the start of power transmission from the wireless charger to the device 102.

In a case that two frequencies are detected, one corresponding to each protocol, which may occur for example if the electronics device 102 is placed on a wireless Qi charger 104 that includes an NFC protection circuit, the electronics device 102 is for example configured to always select either the NFC protocol (operation 406) or the Qi protocol (operation 412). The selection between the protocols is for example programmable within the electronics device 102 such that the same protocol is always selected by default in the case that both frequencies are detected.

In some embodiments, the antenna 202 and matching circuit 302 are adapted to receive RF signals at the NFC frequency of 13.56MHz, and in the case that the device 102 is placed on a Qi wireless charger, the power transfer is degraded with respect to the use of an antenna and matching circuit adapted to the Qi frequency range. However, a power transfer of a relatively high level can still be obtained, as will now be described with reference to Figure 5.

Figure 5 is a graph representing average power (AVE. POWER (dbW)) transmitted as a function of the rail voltage (RAIL VOLTAGE (V)) according to an example embodiment. This graph is described in more detail in the publication by Leonhard Petzel entitled "Coexistence of QI wireless charging and NFC", Master's thesis, Graz, February 2020, the contents of which is hereby incorporated by reference in its entirety, and is available here:
https://diglib.tugraz.at/download.php?id=60a4eb8481fdf&locat ion=browse.

A curve 502 illustrates the case of a wireless card made of plastic and having an antenna with three turns, a curve 504 illustrates the case of a wireless card made of plastic and having an antenna with five turns, and a curve 506 illustrates the case of a wireless card having an inlay only and having an antenna with seven turns. It can be seen that, in the cases of the cards having five and seven turns, the power transferred is relatively high for a rail voltage at the charger of 10V or more, and in the case of a card having seven turns and a rail voltage of 20 V, a power transfer of approaching 1 W can be achieved.

An advantage of the embodiments of the present disclosure is that the wireless electronics device is capable of being charged by a plurality of different types of wireless chargers, employing different protocols and power transmission frequencies.

Various embodiments and variants have been described. Those skilled in the art will understand that certain features of these embodiments can be combined and other variants will readily occur to those skilled in the art. For example, while embodiments based on the NFC and Qi wireless charging protocols have been described, it will be apparent to those skilled in the art that the principles described herein could be applied to other types of wireless chargers using other protocols.

Finally, the practical implementation of the embodiments and variants described herein is within the capabilities of those skilled in the art based on the functional description provided hereinabove.

## Claims

1. A wireless electronics device comprising:
- an antenna (202) for receiving a radio frequency signal;
- a frequency detection circuit (322) configured to detect whether the received radio frequency signal is in a first frequency range or in a second frequency range, the first and second frequency ranges being non-overlapping;
- a first communications circuit (210) configured to transmits a first return signal if the radio frequency signal is in the first frequency range and to establish electrical energy recuperation from the received radio frequency signal according to a first protocol; and
- a second communications circuit (208) configured to transmits a second return signal if the radio frequency signal is in the second frequency range and to establish electrical energy recuperation from the received radio frequency signal according to a second protocol.

2. The wireless electronics device of claim 1, further comprising a power management circuit (212) configured to recuperate the electrical energy from the received radio frequency signal and:
- to supply the recuperated electrical energy to one or more circuits of the wireless electronics device; and/or
- to recharge an energy storage device (206) of the wireless electronics device.

3. The wireless electronics device of claim 1 or 2, wherein the first protocol is the Qi wireless charging protocol and/or the second protocol is the NFC (near field communications) wireless charging protocol.

4. The wireless electronics device of any of claims 1 to 3, wherein the first frequency range has a higher frequency limit that is less than 13 MHz, and the second frequency range has a lower frequency limit that is higher than 300 kHz, the higher frequency limit and lower frequency limit for example being an intermediate frequency level separating the first and second ranges.

5. The wireless electronics device of any of claims 1 to 4, further comprising an oscillator (323) configured to generate a reference signal (F_REF) at a reference frequency, wherein the frequency detection circuit (322) comprises a frequency detector configured to compare a frequency of the radio frequency signal with the reference frequency, and to indicate whether the radio frequency signal is in the first or second frequency range based on the comparison, the frequency detector for example being further configured to indicate when the radio frequency signal is in both the first and second frequency ranges, wherein the wireless electronics devices is for example configured to select one of the first and second communications circuits to be used when the radio frequency signal is in both the first and second frequency ranges.

6. The wireless electronics device of any of claims 1 to 5, further comprising a matching circuit (302) coupled to the antenna (202), wherein the power transfer according to the first protocol is in a higher power range than the power transfer according to the second protocol, and the antenna (202) and matching circuit (302) are tuned to a frequency corresponding to the second protocol.

7. The wireless electronics device of any of claims 1 to 6, wherein:
- the first communications circuit (210) comprises a first modulator (328) and a first demodulator (330), the first modulator (328) and first demodulator (330) being configured to implement wireless communications according to the Qi communications protocol; and/or
- the second communications circuit (208) comprises a second modulator (324) and a second demodulator (326), the second modulator (324) and second demodulator (326) being configured to implement wireless communications according to the NFC communications protocol.

8. The wireless electronics device of claim 7, wherein the first modulator (328) is configured to perform amplitude shift keying (ASK) modulation, and the first demodulator (330) is configured to perform frequency shift keying (FSK) demodulation.

9. The wireless electronics device of claim 7 or 8, wherein the second modulator (324) is configured to perform NFC modulation, for example based on load modulation, and/or the second demodulator (326) is configured to perform NFC demodulation.

10. The wireless electronics device of any of claims 1 to 9, wherein the energy storage device (206) is a battery, the wireless electronics device further comprising an integrated charger (310) for charging the energy storage device.

11. The wireless electronics device of any of claims 1 to 9, further comprising an active rectifier (304) and/or a power limiter (306) configured to limit the charging power supplied according to the first protocol.

12. The wireless electronics device of any of claims 1 to 11, wherein the device is one or more of:
- an integrated circuit (IC) card;
- a mobile telephone;
- a tablet computer;
- wireless headphones, hearing aids or earphones;
- a wrist watch; and
- a portable electronics device comprising a battery.

13. A wireless charging system comprising:
the wireless electronics device (102) of any of claims 1 to 12; and
a wireless charger (104) configured to perform wireless power transfer to, and/or charging of, the wireless electronics device (102) according to the first protocol,
the wireless charger for example being configured to wirelessly emit an electromagnetic field having a power of at least 5 W, and for example of at least 10 W.

14. A wireless charging system comprising:
the wireless electronics device (102) of any of claims 1 to 12; and
a wireless charger (104) configured to perform wireless power transfer to, and/or charging of, the wireless electronics device according to the second protocol, the wireless charger for example being configured to wirelessly emit an electromagnetic field having a power of 3 W or less.

15. A method of wireless powering of an electronics device (102), the method comprising:
- receiving, by an antenna (202) of the electronics device, a radio frequency signal;
- detecting, by a frequency detection circuit (322) of the electronics device, whether the received radio frequency signal is in a first frequency range or in a second frequency range, the first and second frequency ranges being non-overlapping;
- transmitting, by a first communications circuit (210) of the electronics device, a first return signal if the radio frequency signal is in the first frequency range and establishing electrical energy recuperation from the received radio frequency signal according to a first protocol; and
- transmitting, by a second communications circuit (208), a second return signal if the radio frequency signal is in the second frequency range and establishing electrical energy recuperation from the received radio frequency signal according to a second protocol.
